# EUROPÄISCHE PATENTANMELDUNG

(11) **EP 1 034 828 A1**
(43) Veröffentlichungstag der Anmeldung: **13.09.2000**
(21) Anmeldenummer: 00105185.3
(22) Anmeldetag: 11.03.2000
(51) Int. Cl.: B01D 29/11, B01D 29/35, B01D 29/96, E03B 3/02

(54) **Filtervorrichtung für Regenwasser**

(30) Priorität: 12.03.1999 DE 29904538 U
(71) Anmelder: ELWA Wassertechnik GmbH, 49809 Lingen (DE)
(72) Erfinder: Heitker, Martin, 49808 Lingen (DE)
(74) Vertreter: Busse & Busse Patentanwälte

(57) **Zusammenfassung**

Eine Filtervorrichtung für Regenwasser weist eine über wandungsseitige Anschlußöffnungen (3,4) in einen im wesentlichen horizontal verlaufenden Förderkanal (5) integrierte Abscheidekammer (2) auf, in deren Innenraum (22) ein eingeleitetes Regenwasser säubernder Rohrfilter (11) vorgesehen ist. Bei der erfindungsgemäßen Filtervorrichtung (1) ist der Rohrfilter (11) im Nahbereich zumindest einer der Anschlußöffnungen (3,4) zur Abscheidekammer (2) hin durch eine eine vertikale Montage- bzw. Demontagerichtung (H;H') vorgebende Kupplungsbaugruppe (12;12') abgestützt.

## Beschreibung

Die Erfindung betrifft eine Filtervorrichtung für Regenwasser gemäß dem Oberbegriff des Anspruchs 1.

Die Erfindung befaßt sich mit dem Problem, eine Filtervorrichtung für Regenwasser der nach einem älteren Vorschlag gemäß DE 296 14 106.2 bekannten Art zu schaffen, die als einfach montierbare und in unterschiedlichen Konfigurationen einsetzbare Baugruppe mit geringem Aufwand in einen horizontalen Förderkanal integrierbar ist und in dieser Einbaulage einen schnellen Zugriff für eine Säuberung, einen Siebwechsel o. dgl. ermöglicht.

Die Erfindung löst diese Aufgabe durch eine Filtervorrichtung mit den Merkmalen des Anspruchs 1. Hinsichtlich wesentlicher weiterer Ausgestaltungsmerkmale wird auf die Ansprüche 2 bis 15 verwiesen.

Die erfindungsgemäß ausgebildete Filtervorrichtung weist eine Abscheidekammer auf, in der der Rohrfilter durch eine eine vertikale Montage- bzw. Demontagerichtung vorgebende Kupplungsbaugruppe so abgestützt ist, daß die in Einbaulage befindliche Vorrichtung mit geringem Aufwand durch Herausziehen bzw. -heben des Rohrfilters für eine Säuberung der Einzelteile zugänglich ist. Die einfach handhabbare Kupplungsbaugruppe ermöglicht eine schnelle Säuberung und/oder einen Wechsel der Bauteile, beispielsweise des Siebteils im Rohrfilter, da dieser über die Kupplungsbaugruppe in einer lösbaren Rastverbindung gehalten ist und mittels eines Handgriffs aus der Abscheidekammer nach oben entnommen werden kann.

Die beispielsweise über ein Schachtteil im Erdreich positionierte Filtervorrichtung kann im Bereich der Abscheidekammer ebenfalls über eine funktionsgleiche, zweite Kupplungsbaugruppe an den äußeren Förderkanal angeschlossen sein, so daß wahlweise auch die gesamte Abscheidekammer mit dem innenliegenden Rohrfilter gemeinsam zu demontieren ist und diese Baugruppe nach einer Säuberung mit wenigen Handgriffen wieder in die Einbaulage verbracht werden kann. Die Abscheidekammer kann dabei zusätzlich zu den Anschlußöffnungen zum horizontalen Förderkanal mit bodenseitigen und/oder wandungsseitigen Abzweigöffnungen versehen sein, in deren Bereich zusätzliche Feinfilter zur Säuberung des Regenwassers vorgesehen sind.

Weitere Einzelheiten und vorteilhafte Wirkungen der Erfindung ergeben sich aus der nachfolgenden Beschreibung und den Zeichnungen, die mehrere Ausführungsbeispiele der erfindungsgemäßen Filtervorrichtung veranschaulichen.

In der Zeichnung zeigen:
- Fig. 1: eine Prinzipdarstellung eines oberhalb eines Regenwasserbehälters vorgesehenen Domschachtes mit einer in diesen befindlichen Filtervorrichtung,
- Fig. 2: eine vergrößerte Einzeldarstellung der Filtervorrichtung mit Abscheidekammer und innenliegendem Rohrfilter,
- Fig. 3: eine Einzeldarstellung einer Abscheidekammer mit mehreren Anschlußöffnungen,
- Fig. 4: eine Draufsicht auf die Abscheidekammer gemäß Fig. 3,
- Fig. 5: eine Schnittdarstellung der Abscheidekammer ähnlich Fig. 3 mit eingebautem Rohrfilter,
- Fig. 6: eine geschnittene Seitenansicht eines am Rohnfilter vorgesehenen Rohrstutzens als Verbindungsteil,
- Fig. 7: eine Vorderansicht des Rohrstutzens gemäß Fig. 6,
- Fig. 8: eine Vorderansicht eines zur Aufnahme des Rohrstutzens bzw. eines Ansatzrohres der Abscheidekammer vorgesehenen Zwischenrohrteils,
- Fig. 9: eine Schnittdarstellung des Zwischenrohrteils gemäß einer Linie IX-IX in Fig. 8,
- Fig. 10: eine teilweise geschnittene Seitenansicht der im Domschacht befindlichen Abscheidekammer mit einer zweiten Ausführungsform der zum Förderkanal gerichteten Kupplungsbaugruppe,
- Fig. 11: eine Draufsicht der Abscheidekammer gemäß Fig. 10,
- Fig. 12: eine perspektivische Ausschnittsdarstellung des Rohrfilters mit der Kupplungsbaugruppe,
- Fig. 13: eine Darstellung ähnlich Fig. 12 mit der aus Einzelteilen bestehenden Kupplungsbaugruppe, und
- Fig. 14: eine teilweise geschnittene Seitenansicht zweier hintereinander in einen Förderkanal integrierter Filtervorrichtungen.

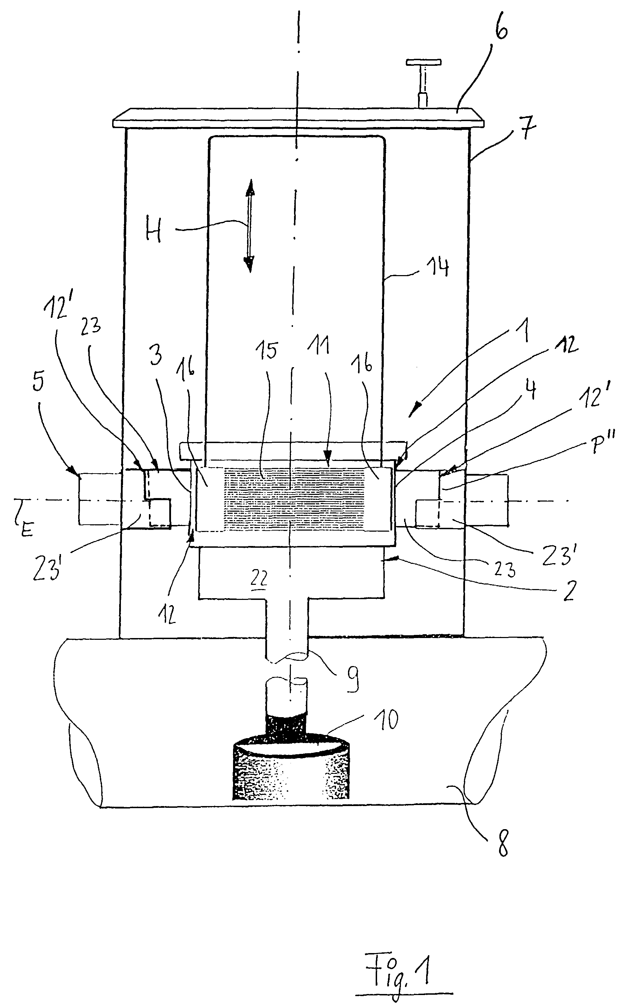

In Fig. 1 ist eine insgesamt mit 1 bezeichnete Filtervorrichtung für Regenwasser in einer Prinzipdarstellung veranschaulicht, wobei die eine Abscheidekammer 2 aufweisende Filtervorrichtung 1 über einen Zulauf 3 und einen Überlauf 4 als Anschlußöffnungen in einen Förderkanal 5 integriert ist, der im Bereich der Filtervorrichtung 1 eine im wesentlichen waagerechte Längsachse E aufweist, so das Regenwasser ohne Höhenverlust in dem Verteil- und Filtersystem aufgenommen wird.

Die Filtervorrichtung 1 ist als Baugruppe in einen einen Deckel 6 aufweisenden Domschacht 7 eingebaut, der oberhalb eines Speicherbehälters 8 angeordnet ist, in den das gereinigte Regenwasser über ein Fallrohr 9 und einen eine Beruhigungszone bildenden Zulauftopf 10 eingeleitet wird. Die Reinigung des Regenwassers im Bereich der Filtervorrichtung 1 erfolgt dabei über zumindest einen an sich bekannten Rohrfilter 11, der nach Art eines selbstreinigenden Zentralfilters In die Abscheidekammer 2 integriert ist. An Stelle des Domschachtes 7 kann auch ein Konusteil eines Betonbehälters o. dgl. Erdspeichers bzw. Tanks aus Kunststoff vorgesehen sein.

Die Filtervorrichtung 1 ist in erfindungsgemäßer Ausführung mit einem Rohrfilter 11 versehen, der im Nahbereich zumindest einer der den Zulauf bzw. Überlauf bildenden Anschlußöffnungen 3,4 durch eine jeweilige Kupplungsbaugruppe 12 so abgestützt ist, daß der Rohrfilter 11 in einer vertikalen Montage- bzw. Demontagerichtung (Pfeil H) aus der Abscheidekammer 2 herausgehoben bzw. in diese zurückgeführt werden kann. In zweckmäßiger Ausführung ist dazu am Rohrfilter 11 ein stabiles Henkelteil 14 vorgesehen.

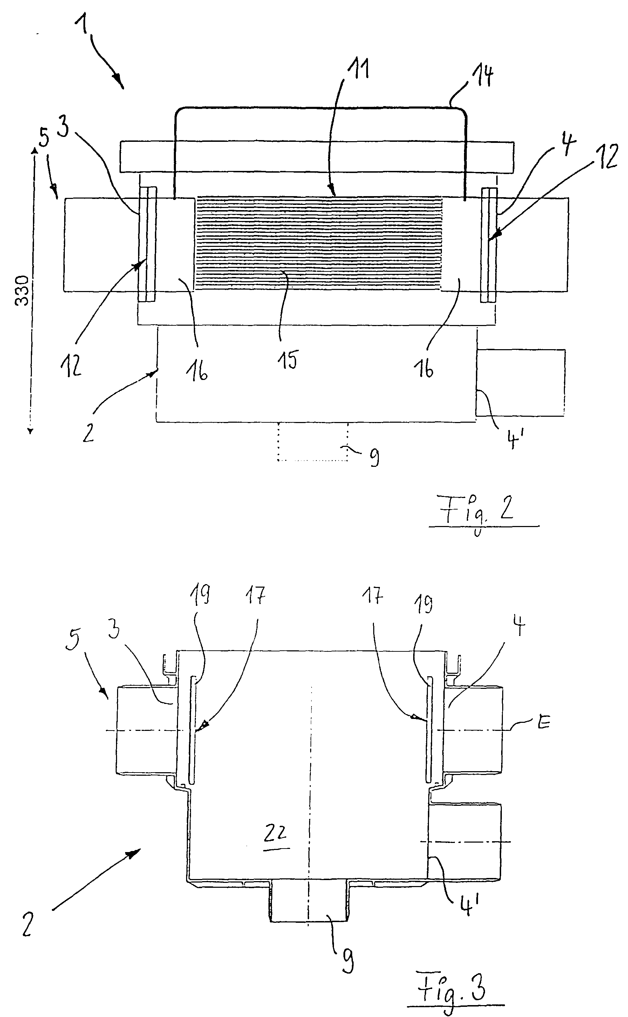

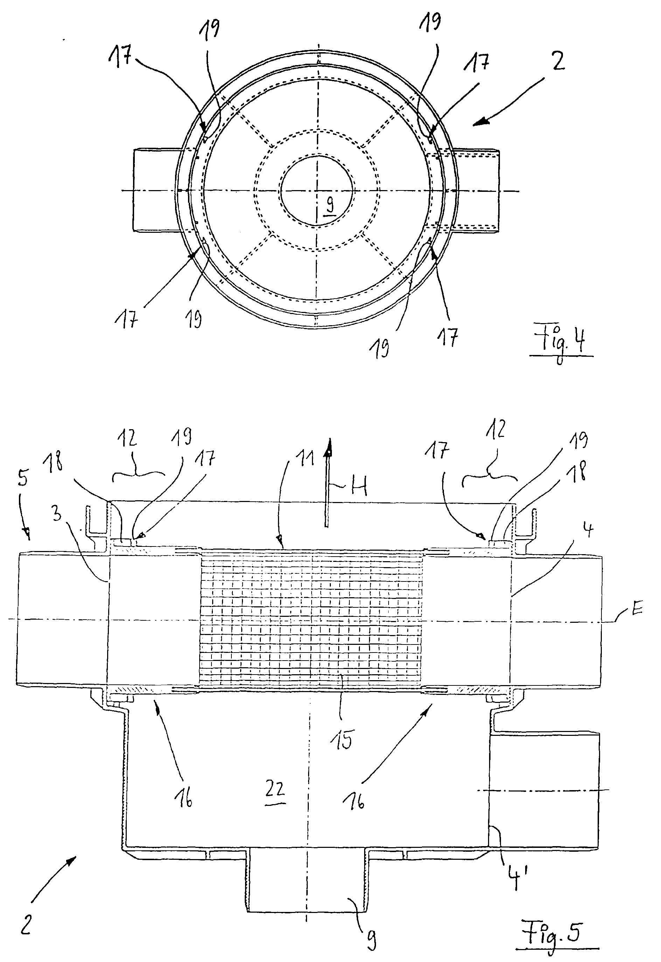

Die in Fig. 1,2,5 und 10 dargestellten und im wesentlichen die gleichen Konstruktionsmerkmale aufweisenden Rohrfilter 11 sind zwischen den wandungsseitig in gleicher Höhe gegenüberliegenden Anschlußöffnungen 3,4 durch eine jeweilige Kupplungsbaugruppe 12 in der Abscheidekammer 2 lösbar festgelegt. Unterhalb des Rohrfilters 11 ist eine weitere Anschlußöffnung 4' vorgesehen und bodenseitig kann über das Fallrohr 9 ebenfalls gesäubertes Regenwasser weitergeleitet werden. Der Rohrfilter 11 weist ein Filtersieb 15 auf, das beidenends mit einem jeweils als Teil der Kupplungsbaugruppe 12 vorgesehenen Rohrstutzen 16 verbunden ist. Dessen freies Ende ist an einem wandungsseitig innerhalb der Anschlußkammer 2 befindlichen Widerlager 17 (Fig. 4) der Kupplungsbaugruppe 12 lösbar abgestützt.

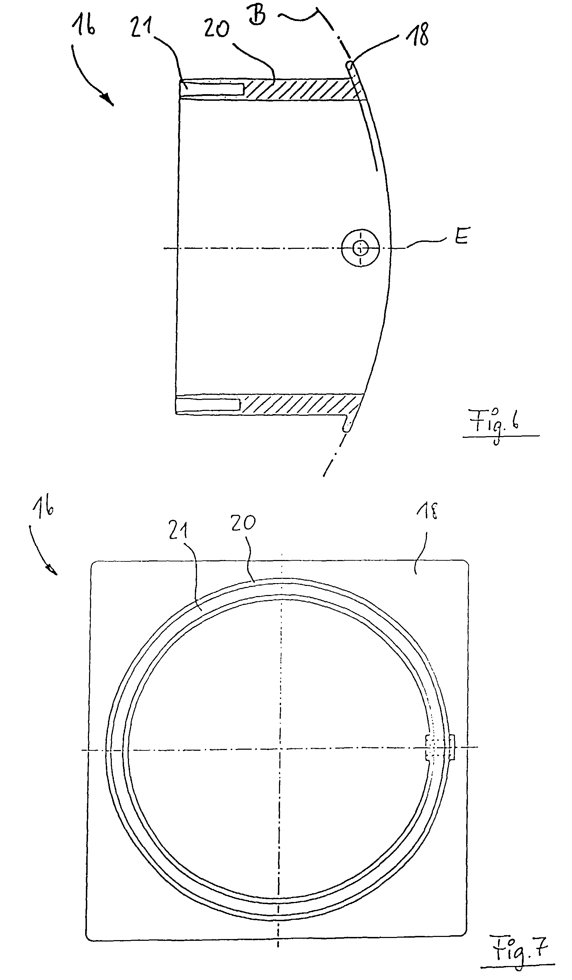

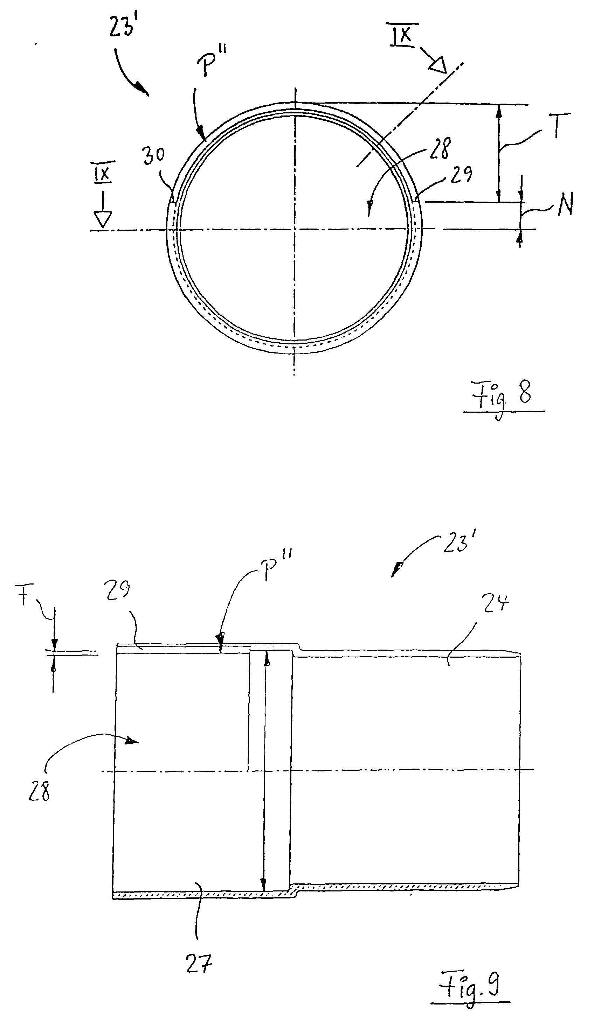

Die Einzeldarstellung des Rohrstutzens 16 gemäß Fig. 6 verdeutlicht in Zusammenschau mit Fig. 7 einen im wesentlichen senkrecht zur Längsmittelebene E des Rohrfilters 11 verlaufenden und an die Bogenkontur B der Wandung der Abscheidekammer 2 angepaßten Flanschansatz 18, der an jeweiligen wandungsseitig im Nahbereich der Anschlußöffnungen 3,4 in die Abscheidekammer 2 vorstehenden Hakenprofilen 19 als Widerlager 17 festlegbar ist (Fig. 3, Fig. 4). Der Rohrstutzen 16 weist auf seiner zum Flanschansatz 18 abgewandten Seite eine zur Rohrwandung 20 koaxiale Aufnahmenut 21 auf, in der das Filtersieb 15 festgelegt ist (Fig. 5). In dieser Verbindungsstellung kann das Filtersieb 15 gemeinsam mit den beiden endseitigen Rohrstutzen 16 aus der Filterstellung (Fig. 5, Pfeil H) entnommen werden, so daß der unter dem Rohrstutzen 16 befindliche Innenraum 22 der Abscheidekammer 2 zugänglich ist (Fig. 4). Im Bereich der Bogenkontur B liegt der Rohrstutzen 16 weitgehend formschlüssig so an der Wandung der Abscheidekammer 2 an, daß eine für die Regenwasserleitung hinreichende Dichtigkeit erreicht ist.

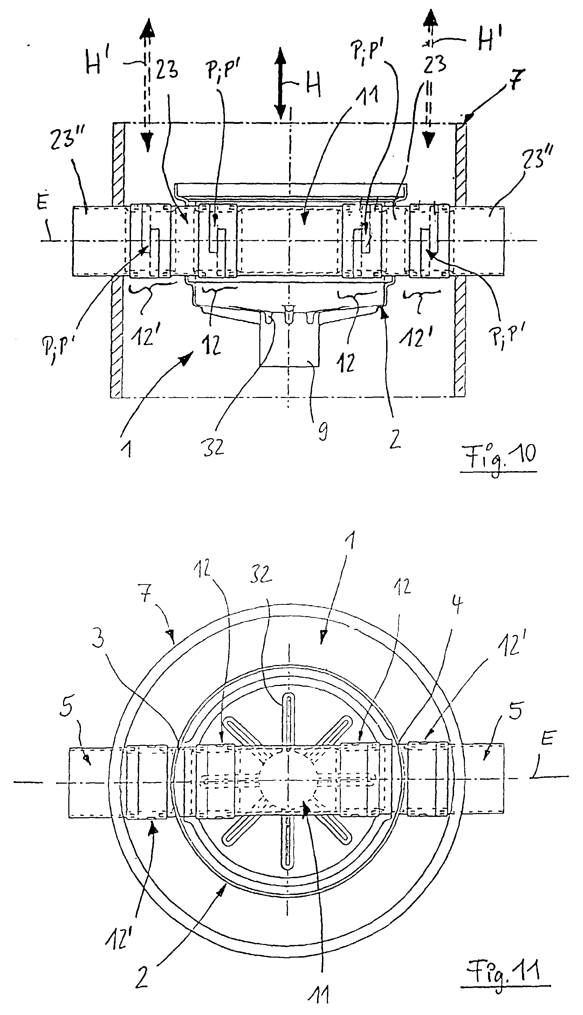

Die Ausführung gemäß Fig. 10 verdeutlicht, daß die Rohrstutzen 16 des Rohrfilters 11 mit einem jeweils die Anschlußöffnungen 3,4 der Abscheidekammer 2 durchgreifenden Zwischenrohrteil 23 versehen sind und mit diesem die Kupplungsbaugruppe 12 innerhalb der Abscheidekammer 2 gebildet ist. In Fig. 9 und Fig. 12 ist das Zwischenrohrteil 23 bzw. 23' in zwei Ausführungsformen durch jeweilige Einzeldarstellungen veranschaulicht, wobei dessen Ausbildung mit einem die Kupplungsbaugruppe 12 bildenden Verbindungsprofil P deutlich wird, das mit einem komplementären Verbindungsprofil P' am Rohrstutzen 16 so zusammenwirkt, daß eine die vertikale Montage- bzw. Demontagerichtung H vorgebende Clip-Verbindung geschaffen ist.

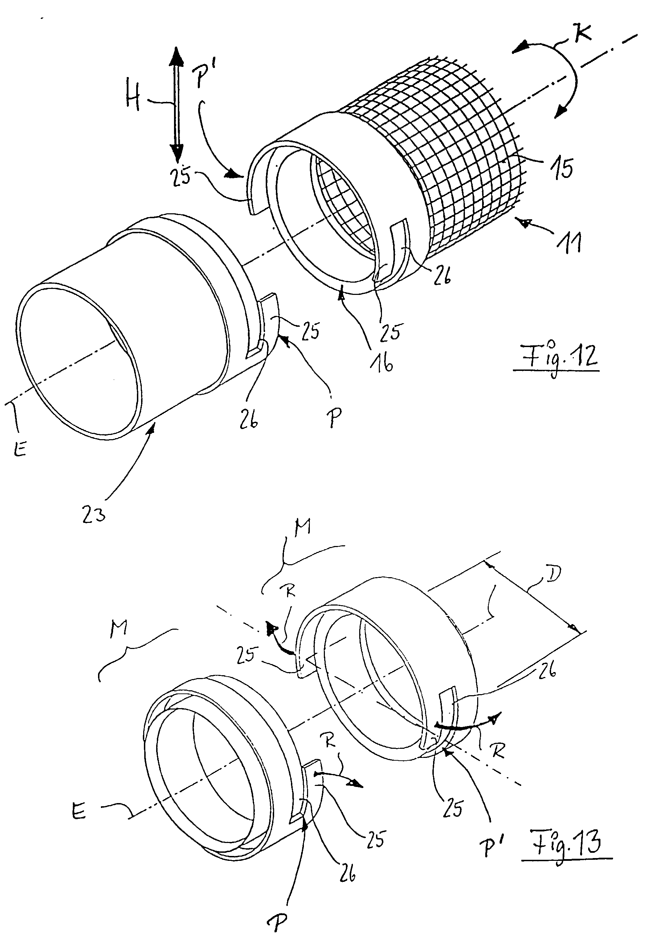

Die in Fig. 10 bis 13 veranschaulichten Verbindungsprofile P,P' als Teile der Kupplungsbaugruppe 12 weisen eine Clip-Verbindung auf, bei der der Rohrstutzen 16 und das Zwischenrohrteil 23 mit jeweiligen in deren Wandungen vorgesehenen radialen Rastansätzen 25 und zu diesen komplementären radialen Formausnehmungen 26 versehen sind (Fig. 12). Die Rastansätze 25 sind dabei von im Querschnitt des rohrförmigen Teils jeweils 180° in Umfangsrichtung überschreitenden Ringbögen gebildet, die in axialer Richtung an jeweils eine der komplementären Formausnehmungen 26 angrenzen. Die Rastansätze 25 greifen in Verbindungsstellung (Fig. 10) so in eine zugeordnete Formausnehmung 26 ein, daß die stirnseitigen Enden der Rastansätze 25 den Außendurchmesser D (Fig. 13) des zugeordneten Rohrbereiches in Umfangsrichtung übergreifen und damit eine Klemmwirkung erreicht ist. Bei der Verlagerung der Rastansätze 25 in diese Verbindungsstellung werden diese in einer Pfeilrichtung R elastisch verschwenkt und danach in die Ausgangsstellung zurückverlagert.

Die Darstellung gemäß Fig. 13 verdeutlicht, daß die Rastansätze 25 und die dazu komplementären Formausnehmungen 26 jeweils an einem als Einzelteil geformten Rohrverbinder in Form einer Muffe M vorgesehen sein können, so daß über diese beiden Muffenteile M eine die zur Rohrlängsachse E senkrechter Montage- bzw. Demontagerichtung H aufweisende Verbindung geschaffen ist. Diese Muffenteile M mit Rastprofilen P,P' sind an weitgehend beliebigen Rohrverbindungen, insbesondere in Systemen zur Regenwassernutzung, einsetzbar.

Die zweite Ausführung des Zwischenrohrteils 23' ist in Fig. 8 und 9 verdeutlicht, wobei das Zwischenrohrteil 23' einen zum Förderkanal 5 gerichteten Steckteil 24 und einen für die Kupplungsbaugruppe als Verbindungsprofil P'' vorgesehenen Aufnahmeteil 27 aufweist. Der Aufnahmeteil 27 ist dabei als ein im Querschnitt kreisbogenförmiger und nach oben offener Muldenteil 28 geformt. Bei Anwendung des Muldenteils 28 im Bereich der Kupplungsbaugruppe 12 (Fig. 10), beispielsweise an Stelle der Rastprofile 25 und 26, wird der Rohrstutzen 16 des Filterrohres 11 oder ein anderes, zweites Rohrteil der Kupplungsbaugruppe 12 in das Verbindungsprofil P'' eingelegt (Fig. 1). Der Muldenteil 28 (Fig. 8) umfaßt dabei in Umfangsrichtung einen Kreisbogen von mehr als 180°, derart, daß die axial verlaufenden Muldenränder 29,30 den in Verbindungsstellung befindlichen Rohrstutzen (nicht dargestellt) in einer Raststellung übergreifen. Das Rastmaß F (Fig. 9) wird von den Größenverhältnissen im Bereich des Öffnungsmaßes T und der Höhe N des Muldenrandes 29,30 bestimmt, wobei dieser Bereich (ähnlich den Rastansätzen 25 in Fig. 13) eine elastische Deformation ermöglicht und damit die vorbeschriebene Montage und Demontage der Bauteile wiederholt möglich ist.

Die Ausführungsformen der Filtervorrichtung 1 gemäß Fig. 1 bzw. Fig. 10 zeigen jeweilige Abscheidekammern 2, die außenseitig im Bereich der beiden Anschlußöffnungen 3 und 4 eine zum Dornschacht 7 gerichtete zweite Kupplungsbaugruppe 12' als Verbindung zum Förderkanal 5 aufweisen. Diese zweite Kupplungsbaugruppe 12' ist entsprechend der vorbeschriebenen ersten Kupplungsbaugruppe 12 aufgebaut, so daß damit der Abscheidekammer 2 zusätzlich zur inneren Aufnahme des Rohrfilters eine äußere, vertikale Montage- bzw. Demontagerichtung gemäß H' vorgegeben ist. Mittels der Kupplungsbaugruppe 12' kann die Abscheidekammer 2 mit dem innenliegenden Rohrfilter 11 als Baugruppe aus dem Domschacht 7 herausgenommen werden, so daß dieser und der Speicherbehälter 8 einfach zugänglich sind.

Die zweite Kupplungsbaugruppe 12' ist in der Ausführung gemäß Fig. 1 mit dem zweiten Zwischenrohrteil 23' versehen, in das das Zwischenrohrteil 23 im Profilbereich P'' (Fig. 9) eingreift und in der Ausführungsform gemäß Fig. 10 ist auch im Bereich der Kupplungsbaugruppe 12' das Verbindungsprofil P,P' vorgesehen.

Mit dieser zweckmäßigen konstruktiven Ausführung mit den Baugruppen 12 und 12' kann die gesamte Filtervorrichtung 1 wahlweise mit geringem Aufwand aus dem Domschacht 7 entnommen werden und im Bedarfsfall durch eine neue Vorrichtung ersetzt oder nach einer Säuberung des Systems in die Einbaulage eingesetzt werden. Ebenso ist nur das Herausnehmen des Rohrfilters 11 möglich und danach eine bodenseitig im Bereich des unteren Fallrohrs 9 vorgesehene Filtereinheit 32 zugänglich.

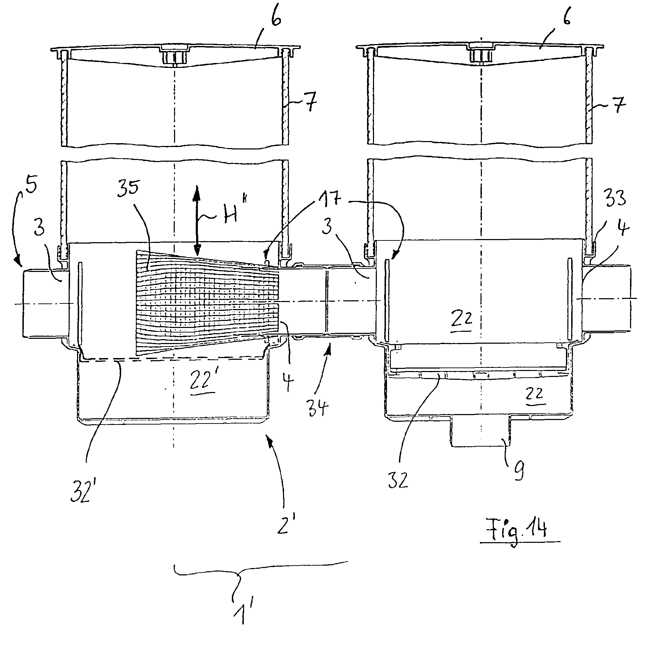

In Fig. 14 ist die Abscheidekammer 2 im Bereich eines oberen Aufnahmeprofils 33 mit dem als Aufsatzrohr ausgebildeten Domschacht 7 verbunden und im Innenraum 22 lediglich die Filtereinheit 32 über dem Fallrohr 9 vorgesehen. Im Bereich der vorderen Anschlußöffnung 3 mündet über eine Zwischenverbindung 34 eine als zusätzliche Baugruppe des Systems vorgesehene Abscheidekammer 2', deren Innenraum 22' unterhalb eines Korbfilters 35 als Beruhigungs- und Schmutzsammelzone ausgebildet ist und keine zusätzliche Auslaßöffnung aufweist. Der Korbfilter 35 ist dabei im Bereich des Widerlagers 17 lösbar mit der Abscheidekammer 2' verbunden und kann in diesem Bereich der Kupplungsbaugruppe in der Hubrichtung H'' aus dem System entnommen werden. Unterhalb des Korbfilters 35 kann der Innenraum 22' zusätzlich durch einen Sammelkorb 32' abgedeckt sein, in dem grober Schmutz aufgenommen wird und der nach Entnahme des Korbfilters 35 eine einfache Säuberung der Abscheidekammer 2' ermöglicht.

In einer weiteren denkbaren Ausführung der Filtervorrichtung 1 kann diese im Bereich des Rohrfilters 11 bzw. des Filtersiebs 15 mit einer diese drehbeweglich abstützenden Verbindungsbaugruppe zum Rohrstutzen 16 bzw. zum Zwischenteil 23, 23' hin versehen sein. Diese Drehbarkeit ermöglicht im Bereich der Schmutzteile aufnehmenden Siebstrecke auf der Innenseite des Filtersiebs 15 eine vereinfachte Wartung der Flltervorrichtung 1, dadurch, daß das Filtersieb 15 nach einer Drehung, beispielsweise um einen Schwenkwinkel von 90°, einen für die Säuberung des Wassers von Verschmutzungen freien Bereich des Siebes als neue Filterstrecke darbietet. Diese Dreh- bzw. Schwenkverstellung (Pfeil K, Fig. 12) kann von Hand oder über einen nicht näher dargestellten Stellantrieb ausgeführt werden, so daß die Filtervorrichtung 1 erst nach einem verlängerten Wartungsintervall vollständig zu säubern ist und damit die Wartungskosten derartiger Vorrichtungen, insbesondere bei große Innendurchmesser aufweisenden Filtersieben 15 von Speicherbehältern 8, vorteilhaft gesenkt werden.

## Patentansprüche

1. Filtervorrichtung für Regenwasser, mit einer über wandungsseitige Anschlußöffnungen (3,4) in einen im wesentlichen horizontal verlaufenden Förderkanal (5) integrierten Abscheidekammer (2) , in deren Innenraum (22) ein eingeleitetes Regenwasser säubernder Rohrfilter (11) vorgesehen ist, **dadurch gekennzeichnet**, daß der Rohrfilter (11) im Nahbereich zumindest einer der Anschlußöffnungen (3,4) zur Abscheidekammer (2) hin durch eine eine vertikale Montage- bzw. Demontagerichtung (H;H') vorgebende Kupplungsbaugruppe (12;12') abgestützt ist.

2. Filtervorrichtung nach Anspruch 1, dadurch gekennzeichnet, daß der Rohrfilter (11) zwischen wandungsseitig in gleicher Höhe (E) gegenüberliegenden Anschlußöffnungen (3,4) durch jeweils eine Kupplungsbaugruppe (12) in der Abscheidekammer (2) abgestützt ist.

3. Filtervorrichtung nach Anspruch 1 oder 2, dadurch gekennzeichnet, daß die den Rohrfilter (11) aufnehmende Abscheidekammer (2) ihrerseits durch zwei außenseitige Kupplungsbaugruppen (12') mit dem Förderkanal (5) verbunden ist, derart, daß die Abscheidekammer (2) mit dem Rohrfilter (11) eine gemeinsam vom Förderkanal (5) trennbare Baugruppe bildet.

4. Filtervorrichtung nach einem der Ansprüche 1 bis 3, dadurch gekennzeichnet, daß die Abscheidekammer (2) in einen Domschacht (7), einen Konusteil o. dgl. Zugangsöffnung eines Erdspeichers integrierbar ist.

5. Filtervorrichtung nach einem der Ansprüche 1 bis 4, dadurch gekennzeichnet, daß der Rohrfilter (11) beidenends mit einem jeweils als Teil der Kupplungsbaugruppe (12) vorgesehenen und mit seinem freien Ende lösbar an einem wandungsseitigen Widerlager (17) der Abscheidekammer (2) abgestützten Rohrstutzen (16) versehen ist, der einen im wesentlichen senkrecht zur Längsmittelebene (E) des Rohrfilters (11) verlaufenden Flanschansatz (18) aufweist, der an einem wandungsseitig in die Abscheidekammer (2) vorstehenden Hakenprofil (19) als Widerlager (17) festlegbar ist.

6. Filtervorrichtung nach einem der Ansprüche 1 bis 5, dadurch gekennzeichnet, daß der Rohrfilter (11) mit Rohrstutzen (16) versehen ist, die in ihrer jeweils zum Flanschansatz (18) abgewandten Stirnseite eine zur Rohrwandung (20) koaxiale Aufnahmenut (21) aufweisen und in diese zumindest bereichsweise ein rohrförmiges Filtersieb (15) eingreift.

7. Filtervorrichtung nach einem der Ansprüche 1 bis 6, dadurch gekennzeichnet, daß die Rohrstutzen (16) des Rohrfilters (11) mit einem jeweils die Anschlußöffnung (3,4) der Abscheidekammer (2) durchgreifenden Zwischenrohrteil (23;23') die Kupplungsbaugruppe (12) bilden.

8. Filtervorrichtung nach Anspruch 7, dadurch gekennzeichnet, daß der Rohrstutzen (16) und das Zwischenrohrteil (23;23') mit formschlüssig ineinandergreifenden Verbindungsprofilen (P;P') versehen sind, die als eine die vertikale Montage- bzw. Demontagerichtung (H;H') vorgebende Clip-Verbindung ausgebildet sind.

9. Filtervorrichtung nach Anspruch 7 oder 8, dadurch gekennzeichnet, daß der Rohrstutzen (16) und das Zwischenrohrteil (23, 23') mit jeweiligen in deren Wandungen vorgesehenen radialen Rastansätzen (25) und zu diesen komplementären radialen Formausnehmungen (26) die Clip-Verbindung bilden.

10. Filtervorrichtung nach einem der Ansprüche 7 bis 9, dadurch gekennzeichnet, daß die Rastansätze (25) von im Querschnitt des rohrförmigen Teils jeweils 180° in Umfangsrichtung überschreitenden Ringbögen gebildet sind, die in axialer Richtung an jeweils eine der komplementären Formausnehmungen (26) angrenzen.

11. Filtervorrichtung nach Anspruch 9 oder 10, dadurch gekennzeichnet, daß die Rastansätze (25) und die komplementären Formausnehmungen (26) an einem als Einzelteil geformten Rohrverbinder (M) vorgesehen sind, der den Rohrstutzen (16) bzw. das Zwischenrohrteil (23, 23') jeweils endseitig übergreift.

12. Filtervorrichtung nach Anspruch 7 oder 8, dadurch gekennzeichnet, daß das Zwischenrohrteil (23, 23') zumindest in einem Endbereich als ein im Querschnitt kreisbogenförmiger und nach oben offener Muldenteil (28) geformt und in diesen der Rohrstutzen (16) des Filterrohrs (11) als zweiter Teil der Kupplungsbaugruppe (12) einlegbar ist.

13. Filtervorrichtung nach Anspruch 12, dadurch gekennzeichnet, daß der Muldenteil (28) in Umfangsrichtung einen Kreisbogen von mehr als 180° ümfaßt, derart, daß die axial verlaufenden Muldenränder (29,30) den Rohrstutzen (16) o. dgl. Verbindungsteil in einer Raststellung übergreifen.

14. Filtervorrichtung nach einem der Ansprüche 1 bis 13, dadurch gekennzeichnet, daß die Abscheidekammer (2) außenseitig im Bereich der beiden Anschlußöffnungen (3,4) die zweite Kupplungsbaugruppe (12') aufweist, die mit einem zweiten Zwischenrohrteil (23'') versehen ist, dessen freies Ende in den Förderkanal (5) eingreift.

15. Filtervorrichtung nach einem der Ansprüche 1 bis 14, dadurch gekennzeichnet, daß der Rohrfilter (11) und/oder das Filtersieb (15) im Bereich der Rohrstützen (16) um die Längsachse (E) der Filterstrecke drehbar abgestützt ist/sind.
